# EUROPÄISCHE PATENTSCHRIFT

(11) **EP 2 611 557 B1**
(45) Veröffentlichungstag und Bekanntmachung des Hinweises auf die Patenterteilung: **20.08.2014**
(21) Anmeldenummer: 11810989.1
(22) Anmeldetag: 31.08.2011
(51) Int. Cl.: B21D 55/00, B23Q 3/155, B21D 37/14, B23Q 11/00, B23Q 11/08, B25J 15/04, B25J 19/06

(54) **WERKZEUGMAGAZIN FÜR EINEN MANIPULATOR**
TOOL MAGAZINE FOR A MANIPULATOR
MAGASIN À OUTILS POUR UN MANIPULATEUR

(30) Priorität: 02.09.2010 AT 14662010
(43) Veröffentlichungstag der Anmeldung: 10.07.2013
(73) Patentinhaber: TRUMPF Maschinen Austria GmbH & Co. KG., 4061 Pasching (AT)
(72) Erfinder: DENKMEIER, Thomas, A-4050 Traun (AT)
(74) Vertreter: Burger, Hannes
(86) Internationale Anmeldenummer: PCT/AT2011/050008
(87) Internationale Veröffentlichungsnummer: WO 2012/027770

(56) Entgegenhaltungen:
- EP-A1- 1 733 840
- EP-A1- 2 067 570
- EP-A2- 0 180 829
- EP-A2- 1 086 781
- DE-A1- 19 643 163
- DE-A1-102005 003 220

## Beschreibung

Die Erfindung betrifft ein Werkzeugmagazin gemäß dem Oberbegriff des Anspruches 1.

Werkzeugmagazine sind ein wichtiger Bestandteil bei der Automatisierung von flexiblen Bearbeitungseinrichtungen, wie beispielsweise Biegezellen. Bei Biegezellen oder sonstigen Fertigungszellen, bei denen der Werkzeugwechsel mittels eines Manipulators erfolgt, werden die für die Fertigungsvorgänge benötigten Werkzeuge in einem geeigneten Werkzeugmagazin oder Werkzeugspeicher bereitgestellt, der im Arbeitsbereich des Manipulators positioniert wird. Ein derartiges Werkzeugmagazin ist beispielsweise aus der Patentschrift AT 506 296 B1 der Anmelderin bekannt. Da der Arbeitsbereich eines Manipulators für eine Bedienperson, die das Werkzeugmagazin bestückt, einen möglichen Gefahrenbereich darstellt, ist es im Allgemeinen erforderlich, den Manipulator für die Zeit der manuellen Bestückung des Werkzeugmagazins still zu setzen. Wahrend des Stillstands des Manipulators kann dann das Werkzeugmagazin je nach dem geplanten Fertigungsprogramm von der Bedienperson bestückt sowie entleert werden oder gegen ein anderes, vorbereitetes Werkzeugmagazin ausgetauscht werden. Das Stillsetzen eines Manipulators bedeutet jedoch immer einen Verlust von produktiver Hauptzeit an einer derartigen Fertigungseinrichtung, weshalb die für das manuelle Rüsten des Werkzeugmagazins erforderliche Zeit möglichst gering gehalten werden soll.

Weitere Fertigungseinrichtungen mit Schutzeinrichtungen zur Absicherung eines Werkzeugmagazins vor gefahrbringenden Kollisionen eines Manipulators oder eines mechanisch angetriebenen Werkzeugmagazins mit einer Bedienperson sind aus EP 0 180 829 A2, DE 10 2005 0003220 A1, DE 196 43 163 A1, EP 1 086 781 A2, EP 2 067 570 A1 und EP 1 733 840 A1 bekannt.

Die Aufgabe der Erfindung besteht darin, die für die Bearbeitung des Werkzeugmagazins durch eine Bedienperson erforderliche Zeit und die damit zusammenhängende Stillstandszeit des Manipulators zu reduzieren, ohne dass dadurch für die Bedienperson eine erhöhte Gefährdung eintritt.

Die Aufgabe der Erfindung wird durch ein Werkzeugmagazin mit den Merkmalen des Anspruches 1 gelöst, wonach das Werkzeugmagazin von einer Seite für den Manipulator zugänglich ist und auf der zweiten Seite für die Bedienperson zugänglich ist und die dazu ausgebildeten Zugriffsöffnungen am Werkzeugmagazin mit jeweils geeigneten Schutzeinrichtungen versehen sind.

Die flächige Anordnung der Werkzeugaufnahmen in einer Bereitstellungsfläche, die von beiden Seiten zugänglich ist, ermöglicht es, ein derartiges Werkzeugmagazin als Abgrenzung des Gefährdungsbereichs um den Manipulator von dem Aufenthaltsbereich einer Bedienperson einzusetzen. Eine Bedienperson ist dadurch nicht gezwungen, den Manipulator still zu setzen und anschließend die nötigen Rüstvorgänge an dem innerhalb eines Schutzzaunes angeordneten Werkzeugmagazin durchzuführen, sondern kann die Bedienperson hauptzeitparallel die Rüstarbeiten am Werkzeugmagazin vornehmen, da ein manueller Zugriff der Bedienperson mit dem entsprechenden Eindringen in den Gefahrenbereich um den Manipulator nur in einem sehr kleinen Bereich stattfindet, der durch die innenliegende, dem Manipulator zugewandte Schutzeinrichtung abgesichert werden kann, während der Großteil des Arbeitsbereiches für die nötigen Bewegungen das Manipulators wie Zuführen von zu biegenden Werkstücken, Führen von Werkstücken während des Biegevorganges, Entnehmen von gebogenen Werkstücken usw. zur Verfügung steht. Durch die zweite außen liegende Schutzeinrichtung ist ein möglicherweise gefahrbringender gleichzeitiger Zugriff der Bedienperson während des Zugriffs durch den Manipulator verhindert.

Durch ein erfindungsgemäßes Werkzeugmagazin lassen sich Rüstvorgänge an der Schnittstelle zwischen dem Gefahrenbereich des Manipulators und dem Aufenthaltsbereich der Bedienperson viel schneller durchführen, als wenn die Bedienperson vor dem eigentlichen Rüstvorgang in den durch einen Schutzzaun oder eine Schutzwand begrenzten Gefahrenbereich eintreten muss und diesen anschließend wieder verlassen muss, wobei auch die notwendigen Zeiten für die vollständige Stillsetzung des Manipulators vor dem Betreten des Gefahrenbereiches einzurechnen sind.

Um jedwede Gefahr für die Bedienperson beim Bestücken des Werkzeugmagazins auszuschließen, sind die erste Schutzeinrichtung und die zweite Schutzeinrichtung miteinander gekoppelt und diese wechselweise aktivier- bzw. deaktivierbar. Ein gleichzeitiger Zugriff durch den Manipulator und die Bedienperson sind dadurch zuverlässig ausgeschlossen, weshalb das Rüsten des Werkzeugmagazins für die Bedienperson ohne Risiko erfolgen kann.

Durch eine Ausführung gemäß Anspruch 2 ist sichergestellt, dass die Zugriffsöffnungen über ihre gesamte Fläche von den Schutzeinrichtungen abgesichert werden. Die Wirkflächen sind dabei entsprechend den Zugriffsöffnungen geformt, wobei eine rechteckige Form für die meisten Anwendungsfälle von Vorteil ist.

Die Ausführung des Werkzeugmagazins gemäß Anspruch 3 ermöglicht den erfindungsgemäßen Effekt des Werkzeugmagazins mit geringem steuerungstechnischem Aufwand, da das mechanisch trennende Schutzwandelement die Schutzfunktion alleine durch die Positionierung vor der entsprechenden Zugriffsöffnung ausübt. Dabei besitzt es eine mechanische Festigkeit, die den zu erwartenden mechanischen Belastungen durch einen Manipulator bzw. durch eine Bedienperson standhält und wodurch eine zuverlässige Absicherung eines Gefährdungsbereiches bewirkt ist. Durch die bewegliche Lagerung kann es mit einfachen Mitteln bzw. durch einfache Handgriffe von der Bedienperson vor die zugehörige Zugriffsöffnung positioniert werden bzw. von dieser entfernt werden. Ein mechanisch trennendes Schutzwandelement erfüllt zusätzlich eine Schutzfunktion gegen einen gefahrbringenden Austritt von Gegenständen z.B. Werkstücken oder Werkzeugen für den Fall, dass der Manipulator die Kontrolle über einen Gegenstand verlieren sollte, was bei bestimmten vorgeschriebenen höheren Sicherheitsanforderungen erforderlich sein kann.

Mit einer Ausführung gemäß Anspruch 4 ist es möglich, die Stellung eines Schutzwandelements relativ zur zugehörigen Zügriffsöffnung mittels des Positionssensors festzustellen und diese Position mit der Steuerung des Manipulators zu verknüpfen, beispielsweise um zu verhindern, dass bei wirksamer Schutzeinrichtung auf der Manipulatorseite des Werkzeugmagazins dieser eine Manipulation am Werkzeugmagazin für die Dauer der Aktivierung der Schutzeinrichtung auf der Manipulatorseite nicht durchführt. Beispielsweise kann der Positionssensor an der Bedienerseite angeordnet sein und den geschlossenen Zustand des Schutzwandelements auf der Bedienerseite überwachen. Von der Steuerung des Manipulators kann dann bei geöffnetem Schutzwandelement auf der Bedienerseite der Zugriff zum Werkzeugmagazin durch den Manipulator blockiert werden. Wird nach dem manuellen Rüsten des Werkzeugmagazins das Schutzwandelement auf der Bedienerseite wieder geschlossen und vor die Zugriffsöffnung positioniert, wird von der Manipulatorsteuervorrichtung dem Manipulator ein Zugriff zum Werkzeugmagazin wieder gestattet.

Ein Positionssensor für das Schutzwandelement an der Bedienerseite des Werkzeugmagazins kann auch in einen Not-Aus-Schaltkreis eingebunden werden, mit dem bei einem Öffnen des Schutzwandelements auf der Bedienerseite der Manipulator unverzüglich stillgesetzt wird, wodurch die Bedienperson jederzeit, ohne Rücksicht auf den Manipulator einen Zugriff zu den Werkzeugaufnahmen tätigen kann.

Eine weitere Erhöhung der Sicherheit kann dadurch erreicht werden, dass gemäß Anspruch 5, das Schutzwandelement mit einer Zuhaltevorrichtung versehen ist, die steuerungstechnisch mit der anderen Schutzeinrichtung gekoppelt ist.

Die Zuhaltevorrichtung kann dazu verwendet werden, das Schutzwandelement gegenüber einem Öffnungsvorgang zu blockieren, solange nicht auf der gegenüberliegenden Seite des Werkzeugmagazins die zweite Schutzeinrichtung voll wirksam ist. Zusätzlich oder alternativ kann die Zuhaltevorrichtung auch mit der Manipulatorsteuerung gekoppelt sein, und ein Öffnen des Schutzwandelements solange blockieren, bis die Bewegungen des Manipulators zum Stillstand gekommen sind. Das Öffnen des Schutzwandelements durch einen Benutzer wird vorzugsweise so lange blockiert bis Zugriffe durch den Manipulator auf das Werkzeugmagazin abgeschlossen sind und die Schutzeinrichtung auf der Manipulatorseite aktiviert ist.

Eine Ausführung des Werkzeugmagazins gemäß Anspruch 6 ist für den Bediener von Vorteil, da bei einem durchsichtigen Schutzwandelement beispielsweise aus Drahtgitter, Lochblech, Sicherheitsglas oder Plexiglas die Sicht auf den Inhalt des Werkzeugmagazins gegeben ist und auch bei aktiver Schutzeinrichtung in Form des durchsichtigen Schutzwandelements ein Feststellen von Position und Art der im Werkzeugmagazin enthaltenen Werkzeuge bzw. der freien Werkzeugaufnahmen möglich ist.

Gemäß Anspruch 7 können die Schutzeinrichtungen durch beweglich gelagerte, mechanisch gekoppelte Schutzwandelemente gebildet sein, wodurch sowohl für den Manipulator als auch für die Bedienperson nur ein zeitlich hintereinander stattfindender Zugriff zu den Werkzeugaufnahmen sichergestellt werden kann, ohne dass umfangreiche Eingriffe in die Steuerung des Manipulators erforderlich sind. Die wechselweise Aktivierung der Schutzeinrichtung ist durch die mechanische Koppelung der Schutzwandelemente in jedem Fall sichergestellt.

Insbesondere können die Schutzwandelemente gemäß Anspruch 8 zueinander parallel und versetzt angeordnet sowie starr miteinander verbunden sein und entlang einer zur Bereitstellungsfläche parallel verlaufenden Führung verstellbar sein. Dadurch wird für das Öffnen und Schließen der Schutzwandelemente nur ein sehr geringer Platzbedarf erforderlich und können einfache Führungen, insbesondere Linearführungen verwendet werden. Der gegenseitige Versatz der auf gegenüberliegenden Seiten der Bereitstellungsfläche angeordneten Schutzwandelemente bewirkt zwangsweise ein Öffnen bzw. Schließen des jeweils anderen Schutzwandelements. Selbstverständlich sind auch aufschwenkbare Schutzwandelemente möglich, unter anderem auch mit mechanischer Koppelung, es ist dabei jedoch dabei ein größerer Platzbedarf erforderlich.

Alternativ oder zusätzlich zur Verwendung eines mechanisch trennenden Schutzwandelements kann gemäß Anspruch 9 zumindest eine Schutzeinrichtung durch eine berührungslos wirkende Schutzeinrichtung mit Annäherungsfunktion gebildet sein, die steuerungstechnisch mit der anderen Schutzeinrichtung und/oder mit einer auf den Manipulator einwirkenden Steuerungsvorrichtung gekoppelt ist. Als Beispiel für eine berührungslos wirkende Schutzvorrichtung mit Annäherungsfunktion ist etwa die Verwendung von Lichtschranken oder Lichtgittern zu nennen. Eine derartige Schutzeinrichtung bildet keine mechanische Barriere die den Zugriff zum Werkzeugmagazin blockiert, sondern überwacht einen Zugriff durch oder eine Annäherung an eine Zugriffsöffnung und kann dadurch im Gegenzug auf der anderen Seite der Bereitstellungsfläche die Aktivierung der anderen Schutzeinrichtung ausgelöst werden. So kann beispielsweise eine berührungslos wirkende Schutzvorrichtung auf der Bedienerseite mit einem Not-Aus-Kreis des Manipulators verknüpft sein, wodurch bei einem Zugriff des Benutzers auf die Werkzeugaufnahmen und einer dadurch bewirkten Auslösung der berührungslosen Schutzvorrichtung der Manipulator unverzüglich stillgesetzt wird und dadurch die Gefährdung beseitigt wird.

Alternativ dazu ist es möglich, dass bei einem Zugriff des Benutzers auf das Werkzeugmagazin der Manipulator nicht angehalten werden muss, sondern lediglich der Zugriff oder die Annäherung zum Werkzeugmagazin steuerungstechnisch blockiert wird. Sind zum Beispiel auf beiden Seiten der Bereitstellungsfläche berührungslos wirkende Schutzeinrichtungen angeordnet, können diese derart gesteuert sein, dass bei einem Zugreifen des Manipulators in das Werkzeugmagazin die Auslösung der benutzerseitigen Schutzeinrichtung eine Not-Aus-Funktion bewirkt und wenn kein Zugriff des Manipulators zum Werkzeugmagazin vorliegt, die benutzerseitige Schutzeinrichtung keine Not-Aus-Funktion bewirkt, sondern lediglich eine Beschränkung des Arbeitsraumes, das heißt, dass für den Manipulator in diesem Fall der Zugriff auf das Werkzeugsystem steuerungstechnisch blockiert wird. Der Abstand der Lichtschranken zueinander bzw. die Maschenweite des Lichtgitters ist dabei so gewählt, dass ein unbemerktes Durchgreifen in den Gefahrenbereich von einem Benutzer bzw. auch ein unbemerktes Durchgreifen des Manipulators unmöglich ist. Alternativ zur Verwendung von Lichtschranken oder Lichtgittern ist auch die Verwendung von Ultraschall-Näherungssensoren oder Infrarot-Näherungssensoren senkbar, wobei im Wesentlichen dieselben Funktionalitäten erreicht werden können.

Eine berührungslos wirkende Schutzeinrichtung ist insbesondere bei Anwendungen einsetzbar, bei denen keine Gefährdung durch vom Manipulator oder einer Fertigungseinrichtung weggeschleuderte Gegenstände besteht, welche eine mechanisch trennende Schutzeinrichtung erforderlich machen würde.

Bei der Verwendung einer berührungslos wirkenden Schutzeinrichtung kann es von Vorteil sein, wenn diese gemäß Anspruch 10 in einem Sicherheitsabstand vom Werkzeugmagazin angeordnet ist. So ist eine ausreichende Schutzfunktion auch dann möglich, falls ab dem Zeitpunkt des Auslösens der berührungslosen Schutzeinrichtung durch einen bewegten Manipulatorarm oder die bewegte Hand eines Benutzers vom Abbremsen bis zum Stillstand des Manipulatorarms eine gewisse Wegstrecke des Manipulatorarms erforderlich ist. Der Sicherheitsabstand zwischen der Schutzeinrichtung und dem Werkzeugmagazin entspricht dabei zumindest dem für das zum Stillstandbringen des Manipulators erforderlichen Weg.

Eine vorteilhafte Weiterbildung des Werkzeugmagazins besteht gemäß Anspruch 11 darin, dass eine mit der Manipulatorsteuerung verbundene Signaleinrichtung vorgesehen ist, die insbesondere dazu verwendet werden kann, dem Benutzer einen bevorstehenden Zugriff des Manipulators zum Werkzeugmagazin anzukündigen, wodurch der manuelle Rüstvorgang bedarfsweise rechtzeitig unterbrochen werden und die benutzerseitige Schutzeinrichtung aktiviert werden kann, und dadurch der Zugriff auf das Werkzeugmagazin für den Manipulator ohne Verzögerung stattfinden kann. Im Anschluss an einen abgeschlossenen Zugriff des Manipulators kann der manuelle Rüstvorgang vom Benutzer wieder fortgesetzt werden. In der Praxis kann von aufgrund des vorausplanbaren Programmablaufes und aufgrund des anhand des Programmablaufes vorausberechenbaren Werkzeugwechsels ein bevorstehender Werkzeugwechsel mehrere Sekunden, vorzugsweise auch länger davor, angekündigt werden.

Eine weitere vorteilhafte Maßnahme zur Verkürzung der Rüstzeiten am Werkzeugmagazin besteht darin, gemäß Anspruch 12 die Werkzeugaufnahmen mit Sensorelementen zur Erfassung von Werkzeuginformationen zu versehen. Eine Identifikation der eingesetzten Werkzeuge kann dadurch unmittelbar nach dem Einsetzen der Werkzeuge in die Werkzeugaufnahmen erfolgen und es muss mit einem Zugriff des Manipulators auf ein eingesetztes Werkzeug nicht darauf gewartet werden, bis vom Benutzer die Werkzeugdaten in die Manipulatorsteuerung eingegeben werden. Ebenso kann durch geeignete Sensoren die Position der eingesetzten Werkzeuge erfasst werden, falls die Werkzeugaufnahmen eine variable Positionierung durch die Bedienperson erlauben.

Zum besseren Verständnis der Erfindung wird diese anhand der nachfolgenden Figuren näher erläutert.

Es zeigen jeweils in stark schematisch vereinfachter Darstellung:
- Fig. 1: eine Schnittdarstellung eines erfindungsgemäßen Werkzeugmagazins;
- Fig. 2: eine Schnittdarstellung einer weiteren möglichen Ausführungsform eines Werkzeugmagazins mit mechanisch trennenden Schutzwandelementen;
- Fig. 3: eine Schnittdarstellung einer weiteren möglichen Ausführungsform eines Werkzeugmagazins mit berührungslos wirkenden Schutzeinrichtungen;
- Fig. 4: eine Ansicht einer Biegezelle mit einer ein erfindungsgemäßes Werkzeugmagazin umfassenden Umgrenzung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

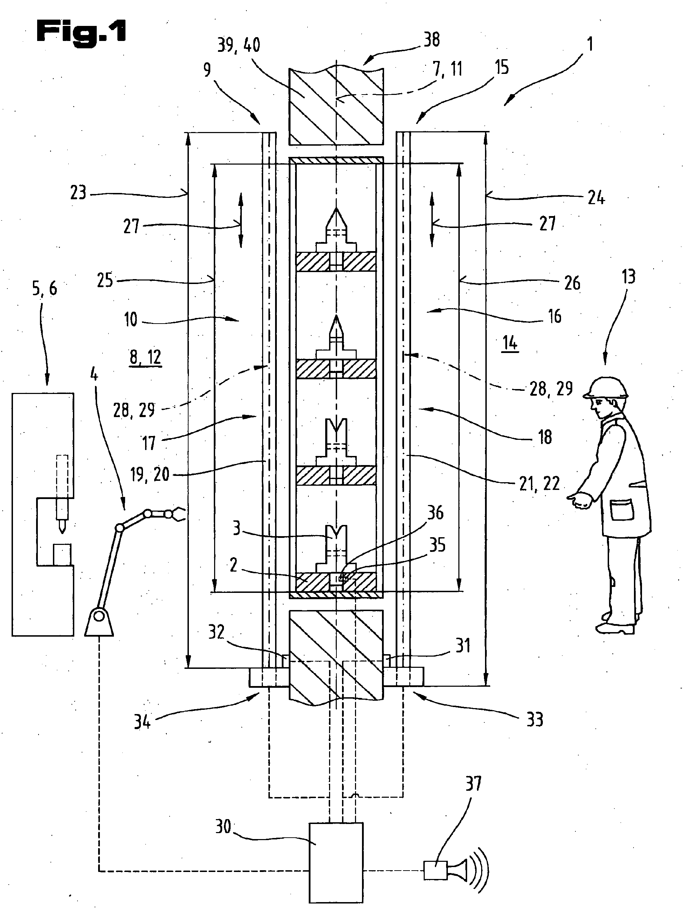

Fig. 1 zeigt einen Schnitt durch ein erfindungsgemäßes Werkzeugmagazin 1, das mehrere Werkzeugaufnahmen 2 zur Bereitstellung von Werkzeugen 3 umfasst. Die Werkzeuge 3 werden von den Werkzeugaufnahmen 2 in definierten Positionen gehalten und für den Zugriff eines Manipulators 4 bereitgestellt bzw. stehen leere Werkzeugaufnahmen 2 für vom Manipulator 4 abzugebende Werkzeuge 3 zur Verfügung. Der Manipulator 4 kann Werkzeuge 3 aus dem Werkzeugmagazin 1 entnehmen und einer Fertigungseinrichtung 5 zuführen. Der Manipulator 4 ist beispielsweise als Industrieroboter oder Gelenkarmroboter ausgeführt und die Fertigungseinrichtung 5 im dargestellten Ausführungsbeispiel als Biegemaschine 6. Demgemäß sind die im Werkzeugmagazin 1 bereitgestellten Werkzeuge 3 beispielsweise als Biegewerkzeuge ausgeführt und werden diese mittels des Manipulators 4 in die Biegemaschine 6 eingesetzt. Der Manipulator 4 kann neben der Handhabung der Werkzeuge 3 auch zur Handhabung von Werkstücken, die an der Fertigungseinrichtung 5 bearbeitet werden, eingesetzt werden, weshalb auch die Verwendung eines Industrieroboters für diesen flexiblen Einsatz möglich ist.

Die Werkzeugaufnahmen 2 besitzen an die jeweils verwendeten Werkzeuge 3 angepasste Haltevorrichtungen oder mechanische Schnittstellen, die mit Teilabschnitten der Werkzeuge 3 exakt definierte Positionen der darin aufgenommenen Werkzeuge 3 bewirken. Für die beispielhaft dargestellten Biegewerkzeuge weisen die Werkzeugaufnahmen 2 entsprechende Nuten auf, in denen die Anschlussflächen der Biegewerkzeuge positioniert werden. Das exakte Ergreifen der Werkzeuge 3 kann dabei durch geeignete Maßnahmen unterstützt werden, etwa durch spezielle Greifausnehmungen oder Bohrungen an den Werkzeugen 3, in die ein speziell geformtes Greifelement, etwa ein Greifdorn des Manipulators 4 eingreifen kann.

Die Werkzeuge 3 sind dabei in einer Bereitstellungsfläche 7 verteilt angeordnet, wobei diese bezogen auf den Manipulator 4 so in dessen Arbeitsraum 8 angeordnet ist, dass der Manipulator 4 auf Werkzeugaufnahmen 2 bzw. die darin bereitgestellten Werkzeuge 3 zugreifen kann oder in den Werkzeugaufnahmen 2 Werkzeuge 3 ablegen kann. Dazu ist eine erste Seite 9 des Werkzeugmagazins 1 bzw. der Bereitstellungsfläche 7 dem Manipulator 4 zugewandt und besitzt das Werkzeugmagazin 1 zumindest eine erste Zugriffsöffnung 10, durch die der Manipulator 4 in das Innere des Werkzeugmagazins 1 zu den Werkzeugen 3 zugreifen kann.

Die Bereitstellungsfläche 7 ist im dargestellten Ausführungsbeispiel als vertikal orientierte Bereitstellungsebene 11 ausgeführt, es können jedoch auch abweichend davon andere flächige Grundformen der Bereitstellungsfläche 7 möglich sein, wie zum Beispiel eine bogenförmige oder abgewinkelte Ausführung und kann die Bereitstellungsfläche 7 weiters aus Sicht des Manipulators 4 konkav oder konvex ausgeführt sein. Die Bereitstellungsfläche 7 und die darin verteilt angeordneten Werkzeugaufnahmen 2 sind, wie bereits erwähnt, innerhalb des durch dessen Reichweite bestimmten möglichen Arbeitsraumes 8 des Manipulators 4 angeordnet, der normalerweise einen Gefahrenbereich 12 darstellt und innerhalb dessen eine Gefährdung einer Bedienperson 13 durch den bewegten Manipulator 4 möglich ist. An dieser Stelle sei angemerkt, dass der in Fig. 1 dargestellte Manipulator 4 im Verhältnis zum Werkzeugmagazin 1 verkleinert dargestellt ist und in Wirklichkeit, wie auch die Fertigungseinrichtung 5 bzw. die Bedienperson 13 im Allgemeinen größer ist, als die Abmessung des Werkzeugmagazins 1. Das Werkzeugmagazin 1 wird von der Bedienperson 13 manuell mit Werkzeugen 3 bestückt, wobei dieser Rüstvorgang gezwungenermaßen im Aufenthaltsbereich 14 der Bedienperson 13 stattfindet. Das Werkzeugmagazin 1 besitzt eine der ersten Seite 9 gegenüber liegende zweite Seite 15, die der Bedienperson 13 zugewandt ist und weist zumindest eine zweite Zugriffsöffnung 16 auf, durch die die Bedienperson Zugriff auf die Werkzeugaufnahmen 2 bzw. die Werkzeuge 3 hat. Das Werkzeugmagazin 1 befindet sich also zwischen dem Manipulator 4 und der Bedienperson 13.

Da sich das Innere des Werkzeugmagazins 1 sowohl im Gefahrenbereich 12 im Arbeitsraum 8 des Manipulators 4 als auch im Aufenthaltsbereich 14 der Bedienperson 13 befindet, ist im Inneren des Werkzeugmagazins 1 für die Bedienperson 13 eine Gefährdung durch den Manipulator 4 möglich, wenn beispielsweise gleichzeitig ein Zugriff durch die Bedienperson 13 als auch durch den Manipulator 4 stattfinden sollte.

Zur Beseitigung dieser möglichen Gefährdung der Bedienperson 13 im Inneren des Werkzeugmagazins 1 ist der ersten Zugriffsöffnung 10 eine erste Schutzeinrichtung 17 zugeordnet und weiters der zweiten Zugriffsöffnung 16 eine zweite Schutzeinrichtung 18 zugeordnet. Durch die erste Schutzeinrichtung 17 und die zweite Schutzeinrichtung 18 wird die Überschneidung des Gefahrenbereiches um den Manipulator 4 mit dem Aufenthaltsbereich 14 der Bedienperson 13 aufgehoben, weshalb auch eine mögliche Gefährdung für die Bedienperson 13 beim Rüsten des Werkzeugmagazins 1 vermieden ist. Die erste Schutzeinrichtung 17 kann dabei vorzugsweise als mechanisch trennendes Schutzwandelement 19 oder aber auch als berührungslos wirkende Schutzeinrichtung 20 mit Annäherungsfunktion ausgebildet sein. Ebenso kann die zweite Schutzeinrichtung 18 vorzugsweise als mechanisch trennendes Schutzwandelement 21 oder als berührungslos wirkende Schutzeinrichtung 22 mit Annäherungsfunktion ausgebildet sein.

Die erste Schutzeinrichtung 17 und die zweite Schutzeinrichtung 18 besitzen schutzwirksame Abmessungen 23 bzw. 24, die größer sind als die jeweils zugehörigen lichten Weiten 25 bzw. 26 der jeweiligen Zugriffsöffnung 10 bzw. 16, wodurch die Zugriffsöffnungen 10 und 16 bei aktivierten Schutzeinrichtungen 17 und 18 jeweils zur Gänze vor einem mit einer Gefährdung verbundenen Zugriff durch den Manipulator 4 bzw. die Bedienperson 13 geschützt sind.

Bei der Verwendung eines mechanisch trennenden Schutzwandelements 19, 21 ist der Zugriff jeweils mechanisch blockiert, wozu ein derartiges Schutzwandelement 19, 21 über eine Festigkeit verfügt, die den in Ausübung der Schutzfunktion zu erwartenden, mechanischen Belastungen durch den Manipulator 4 bzw. die Bedienperson 13 standhält. Weiters muss ein Schutzwandelement 19, 21 zur Freigabe der Zugriffsöffnungen 10, 16 verstellbar sein, was durch Pfeile 27 in Fig. 1 angedeutet, etwa in vertikaler Richtung möglich ist. Es sind jedoch auch andere Bewegungsrichtungen eines Schutzwandelements 19, 21 möglich, wie zum Beispiel ein zur Seite schwenken oder ein Aufschwenken usw. Die mit Pfeil 27 dargestellte Bewegungsrichtung eines Schutzwandelementes 19 bzw. 21 zur Aktivierung bzw. Deaktivierung seiner Schutzfunktion in einer zur Bereitstellungsfläche 7 parallelen Richtung bewirkt, dass der Arbeitsraum 8 bzw. der Aufenthaltsbereich 14 durch die Verstellbewegung möglichst wenig beeinflusst wird.

Bei einem Werkzeugmagazin 1 mit einer berührungslos wirkenden Schutzeinrichtung 20, 22 kann diese ortsfest angeordnet sein, da hier der Zugriff nicht durch mechanische Trennung blockiert wird, sondern beispielsweise durch strichliert angedeutete Lichtschranken 28 oder Lichtgitter 29 eine Annäherung an oder ein Zugriff in das Innere des Werkzeugmagazins 1 festgestellt und darauf basierend unmittelbar Maßnahmen zur Beseitigung einer möglichen Gefährdung der Bedienperson eingeleitet werden bzw. durchgeführt werden. Die Schutzmaßnahmen bestehen beispielsweise darin, dass bei Unterbrechung eines Lichtschrankens 28 oder eines Lichtgitters 29 bei der dem Aufenthaltsbereich 14 zugewandten, berührungslosen Schutzeinrichtung 22 durch die Bedienperson 13 der Manipulator 4 sofort zum Stillstand gebracht wird, wodurch eine Kollision mit der Bedienperson 13 bzw. deren Händen sofort vermieden wird.

Bei Schutzeinrichtungen 17, 18 in Form von Schutzwandelementen 19, 21 können diese über ein in Fig. 1 nicht dargestelltes Koppelelement mechanisch miteinander gekoppelt sein, wobei in diesem Fall die Schutzwandelemente 19, 21 den Zugriff in das Werkzeugmagazin 1 entweder nur für den Manipulator 4 oder die Bedienperson 13 zulassen. In diesem Fall sind die Schutzwandelemente 19 und 21 durch das Koppelelement so miteinander verbunden, dass ein Öffnen des einen Schutzwandelementes 19, 21 ein Schließen des anderen Schutzwandelementes 21, 19 bewirkt und umgekehrt. Dabei ist es aus Sicherheitsgründen von Vorteil, wenn die Schutzwandelemente 19, 21 so zueinander versetzt angeordnet sind, dass ein vom ersten Schutzwandelement 19 bereits freigegebener Teilabschnitt der Zugriffsöffnung 10 auf der Seite 15 der Bedienerperson bereits vom zweiten Schutzwandelement 21 verdeckt ist, wodurch etwa ein gleichzeitiger Zugriff auf dieselbe Werkzeugaufnahme 2 und eine damit einhergehende Gefährdung der Bedienperson 13 vermieden ist.

Das Werkzeugmagazin 1 in Fig. 1 zeigt beispielhaft vier Werkzeugaufnahmen 2, die von beiden Seiten 9, 15 jeweils durch eine große Zugriffsöffnung 10, 16 für den Manipulator 4 bzw. die Bedienperson 13 zugänglich sind. Es ist jedoch auch möglich, die Werkzeugaufnahmen 2 in mehrere Gruppen aufzuteilen, wobei jeder Gruppe eine eigene Zugriffsöffnung 10, 16 mit einer entsprechenden Schutzeinrichtung 17, 18 ausgebildet sein kann. Weiters kann die Gruppierung von Werkzeugaufnahmen 2 auf der ersten Seite 9 anders sein als auf der zweiten Seite 15, beispielsweise könnten alle vier Werkzeugaufnahmen 2 in Fig. 1 wie dargestellt auf der Seite 9 des Manipulators 4 über eine große Zugriffsöffnung 10, die mit der ersten Schutzeinrichtung 17 abgesichert ist, zugänglich sein, während auf der Seite 15 der Bedienperson 13 jeweils zwei Werkzeugaufnahmen 2 zu einer Gruppe zusammengefasst sind, die über zwei Zugriffsöffnungen 16 zugänglich sind und mit zwei zweiten Schutzeinrichtungen 18 abgesichert sind. Darüber hinaus kann auch jede Werkzeugaufnahme 2 für sich alleine mit einer eigenen Schutzeinrichtung 17, 18 abgesichert sein. So könnte etwa die Bedienperson 13 zu den Werkzeugaufnahmen 2 Zugriff haben, indem jede Werkzeugaufnahme 2 für sich mit einer zweiten Schutzeinrichtung 18, beispielsweise in Form eines beweglichen Schutzwandelements 21 abgesichert ist und die Werkzeugaufnahme 2, an der gerade ein manueller Rüstvorgang durch die Bedienperson 13 stattfindet, steuerungstechnisch für einen Zugriff durch den Manipulator 4 blockiert wird.

Eine weitere mögliche Ausführungsform des Werkzeugmagazins 1 besteht darin, dass die erste Schutzeinrichtung 17 und die zweite Schutzeinrichtung 18 mittels einer Steuerungsvorrichtung 30 auch steuerungstechnisch gekoppelt sind, und die Schutzfunktion dadurch hergestellt wird, dass die Steuerungsvorrichtung 30 in Abhängigkeit von den Zuständen der ersten Schutzeinrichtung 17 und/oder der zweiten Schutzeinrichtung 18 auf den Manipulator 4 einwirkt.

Eine steuerungstechnische Sicherheitsmaßnahme kann etwa darin bestehen, dass bei einem Zugriff der Bedienperson 13 auf eine der Werkzeugaufnahmen 2 die Bewegungen des Manipulators 4 vollständig stillgesetzt werden oder der Bereich des Werkzeugmagazins 1 aus seinem möglichen Arbeitsraum 8 steuerungstechnisch ausgeschlossen wird. Ein Zugriff der Bedienperson 13 zum Werkzeugmagazin 1 wird beispielsweise dadurch festgestellt, dass die zweite Schutzeinrichtung 18 als berührungslos wirkende Schutzeinrichtung 22 ausgeführt ist, die eine Annäherung der Bedienperson 13 feststellt, beispielsweise durch Unterbrechung eines Lichtschrankens 28 oder eines Lichtgitters 29.

Bei der Ausführung der zweiten Schutzvorrichtung 18 in Form eines beweglichen mechanisch trennenden Schutzwandelements 21 kann der Zugriff der Bedienperson 13 beispielsweise dadurch festgestellt werden, dass die Öffnungsbewegung des Schutzwandelements 21 mittels eines Positionssensors 31 detektiert wird, der beispielsweise als mechanischer Schalter oder als ein auf optischer, induktiver, kapazitiver oder sonstiger Basis funktionierender Sensor ausgebildet ist. Zusätzlich oder alternativ kann auch die Position eines manipulatorseitigen Schutzwandelements 19 mittels eines Positionssensors 32 überwacht werden, wodurch der geschlossene Zustand des manipulatorseitigen Schutzwandelements 19 abgefragt werden kann.

Zur Erhöhung der Sicherheit können weiters die mechanisch trennenden Schutzwandelemente 19 und 21 mittels einer Zuhaltevorrichtung 33 auf der Bedienerseite 15 und/oder einer Zuhaltevorrichtung 34 auf der Manipulatorseite 9 abgesichert sein. Diese Zuhaltevorrichtungen 33 und 34 können dazu verwendet werden, eine Öffnungsbewegung bei unabhängig voneinander verstellbaren, mechanisch nicht gekoppelten Schutzwandelementen 19 und 21 jeweils nur freizugeben, wenn das jeweils andere Schutzwandelement 21, 19 den geschlossenen Zustand erreicht hat. Die bedienerseitige Zuhaltevorrichtung 33 kann darüber hinaus auch so wirken, dass ein Öffnen des äußeren Schutzwandelements 21 erst möglich ist, wenn der Bereich um das Werkzeugmagazin 1 für den Manipulator 4 steuerungstechnisch blockiert wurde.

Zur Erleichterung der manuellen Rüstvorgänge für die Bedienperson 13, ist es bei Verwendung von mechanisch trennenden Schutzwandelementen 19, 21 von Vorteil, wenn zumindest das bedienerseitige äußere Schutzwandelement 21 zur Gänze oder zumindest abschnittsweise aus durchsichtigem Material, beispielsweise einem Gitter, Plexiglas oder Sicherheitsglas hergestellt ist, wodurch die Bedienperson 13 ohne das Schutzwandelement 21 zu öffnen, die Belegung des Werkzeugmagazins 1 optisch erfassen kann.

Eine weitere mögliche Erleichterung für die Bedienperson 13 kann darin bestehen, die Werkzeugaufnahmen 2 mit Sensorelementen 35 auszustatten, mit denen jeweils Informationen über ein in einer Werkzeugaufnahme 2 eingesetztes Werkzeug 3 automatisch erfasst werden können und an die Steuerungsvorrichtung 30 übergeben werden können. Insbesondere können dabei die Werkzeuge 3 mit einem Informationsträger 36 versehen sein, der eine Werkzeugidentifikation und/oder Werkzeugdaten enthalten kann. Mittels eines messenden Sensorelements 35 ist es alternativ oder zusätzlich auch möglich, die Position eines Werkzeugs 3 in Bezug auf die Werkzeugaufnahme 2 festzustellen und diese Position ebenfalls an die Steuerungsvorrichtung 30 zu übergeben. Dadurch können die Werkzeugaufnahmen 2 flexibel mit unterschiedlichen Werkzeugen 3 in unterschiedlichen Dimensionen und auch an variablen Positionen bestückt werden. Das Übertragen von Informationen aus dem Informationsträger 36 kann beispielsweise berührend über elektrische Kontakte oder aber auch berührungslos über induktive, kapazitive oder optische Übertragung erfolgen. Der Informationsträger 36 kann beispielsweise als nicht flüchtiger Speicherchip, als RFID-Element, als Strichcode oder sonstige Form eines Informationsspeichers ausgebildet sein.

Eine weitere Unterstützung der Bedienperson während des Rüstvorganges kann darin bestehen, den Zeitpunkt eines planmäßigen Zugriffs des Manipulators 4 auf das Werkzeugmagazin 1 mittels der Steuerungsvorrichtung 30 im Voraus zu berechnen und der Bedienperson 13 mittels einer mit der Steuerungsvorrichtung 30 verbundenen Signaleinrichtung 37 einen bevorstehenden Zugriff des Manipulators 4 anzukündigen, beispielsweise durch ein akustisches und/oder optisches Signal oder durch Anzeige der für den manuellen Rüstvorgang verbleibenden Zeit bis zum geplanten Zugriff durch den Manipulator 4. Sollte die Bedienperson bis zu diesem Zeitpunkt den manuellen Rüstvorgang nicht abgeschlossen haben und die bedienerseitige Schutzvorrichtung 18 nicht aktiviert sein, wird die Programmabarbeitung des Manipulators 4 angehalten.

In Fig. 1 ist weiters dargestellt, dass das erfindungsgemäße Werkzeugmagazin 1 ein Teil oder eine Ergänzung einer flächigen Schutzeinrichtung 38 sein kann, insbesondere in Form eines Schutzzaunes 39 oder einer Schutzwand 40, mit dem der Arbeitsraum 8 des Manipulators 4 und der dadurch bewirkte Gefahrenbereich 12 vom Aufenthaltsbereich 14 der Bedienperson 13 abgegrenzt wird. Das Werkzeugmagazin 1 bildet dabei einen Teilabschnitt der flächigen Schutzeinrichtung 38.

Die flächige Schutzeinrichtung 38 mit dem erfindungsgemäßen Werkzeugmagazin 1 kann insbesondere die äußere Umgrenzung und dadurch einen Bestandteil einer Biegezelle bilden, die den Manipulator 4 und eine im Arbeitsraum 8 des Manipulators 4 angeordnete Biegemaschine 6 umgrenzt und die gefahrbringende Annäherung von Personen verhindert.

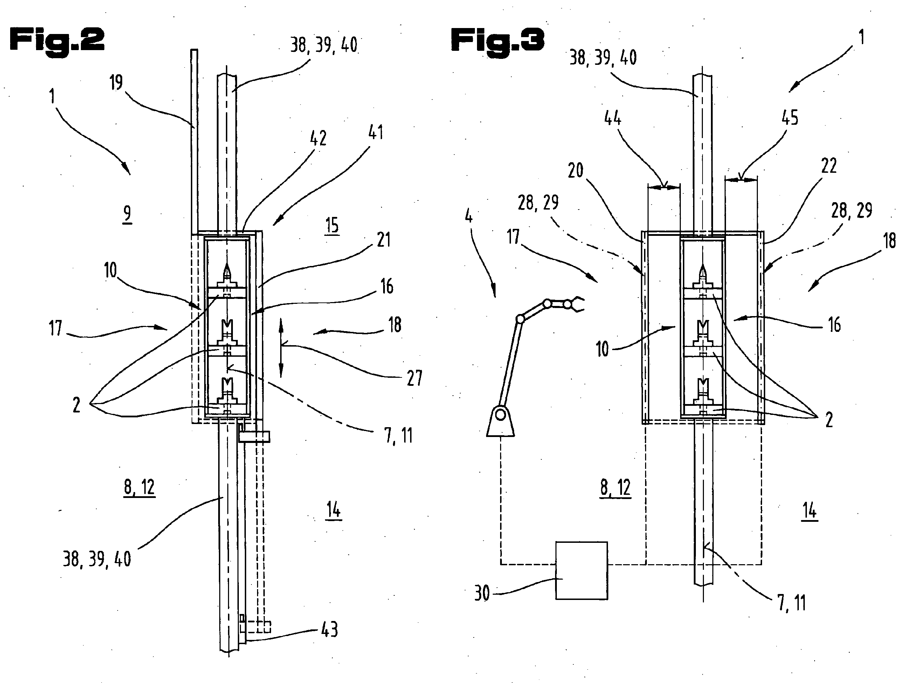

In Fig. 2 ist ein weiteres Ausführungsbeispiel eines erfindungsgemäßen Werkzeugmagazins 1 dargestellt, bei dem die erste Schutzeinrichtung 17 durch ein bewegliches erstes Schutzwandelement 19 auf der ersten Seite 9, der Manipulatorseite, des Werkzeugmagazins 1 gebildet ist und die zweite Schutzeinrichtung 18 in Form eines beweglichen Schutzwandelements 21 auf der zweiten Seite 15, der Benutzerseite, bezüglich der Bereitstellungsfläche 7 gegenüberliegend angeordnet sind. Die Schutzwandelemente 19, 21 besitzen Abmessungen, die größer sind, als die vor Zugriff zu schützenden Zugriffsöffnungen 10 und 16 und sind so gegeneinander versetzt angeordnet, dass sie sich in frontaler, zur Bereitstellungsfläche 7 rechtwinkeliger Richtung betrachtet, in einem Überlappungsbereich 41 zumindest geringfügig überlappen. Zusätzlich sind die Schutzwandelemente 19, 21 mittels eines Koppelelementes 42 mechanisch miteinander verbunden, das heißt eine Verstellung des einen Schutzwandelements 19 bewirkt gleichzeitig eine Verstellung des gegenüberliegenden Schutzwandelements 21.

Im in Fig. 2 dargestellten Ausführungsbeispiel sind die Schutzwandelemente 19 und 21 entlang einer zur Bereitstellungsfläche 7 parallelen Führung 43 verschiebbar, wodurch sowohl der Arbeitsraum 8 des Manipulators 4, der den abzugrenzenden Gefahrenbereich 12 darstellt, als auch der Aufenthaltsbereich 14 einer Bedienperson 13 durch die Verstellung der Schutzwandelemente 19, 21 möglichst wenig beeinflusst werden. Bei einer Bereitstellungsfläche 7, die nicht durch eine Bereitstellungsebene 11 gebildet ist, sondern auch eine Ausdehnung in einer dritten Dimension aufweist, kann die Führung 43 entsprechend dem Verlauf der Bereitstellungsfläche 7 angepasst sein, beispielsweise gekrümmt. Die Führung 43 kann dabei an einer anschließenden, flächigen Schutzeinrichtung 38 in Form eines Schutzzaunes 39 oder einer Schutzwand 40 angeordnet sein oder aber auch ein Bestandteil des Werkzeugmagazins 1 selbst sein.

In Fig. 2 ist leicht das wechselseitige Aktivieren bzw. Deaktivieren der jeweiligen Schutzeinrichtung 17 und 18 durch Verstellen der entsprechenden Schutzwandelemente 19 und 21 erkennbar und ist neben einer in Volllinien dargestellten Ausgangsstellung, in der ein Zugriff auf die Werkzeugaufnahmen 2 durch die erste Zugriffsöffnung 10 möglich ist und der Zugriff durch die zweite Zugriffsöffnung 16 blockiert ist, sowie in strichlierten Linien die alternative Stellung, bei der der Zugriff in die erste Zugriffsöffnung 10 blockiert ist und im Gegenzug der Zugriff durch die zweite Zugriffsöffnung 16 freigegeben ist, dargestellt.

Die Verstellbewegung der beweglichen Schutzwandelemente 19, 21 kann bei verschiedenen Ausführungsformen der Erfindung auf unterschiedliche Weise bewirkt werden. So kann beispielsweise die Verstellbewegung von der Bedienperson 13 manuell bewirkt werden oder aber auch durch geeignete, nicht dargestellte Verstellantriebe, zum Beispiel Linearantriebe, Pneumatikzylinder, Zahnriemenantriebe usw. bewirkt oder unterstützt werden. Selbstverständlich können bei allen Ausführungsformen wie auch in Fig. 1 dargestellt, entsprechende Positionssensoren 31, 32 sowie Zuhaltevorrichtungen 33, 34 vorgesehen sein, die weiters auch mit einer Steuerungsvorrichtung 30 des Werkzeugmagazins 1 bzw. des Manipulators 4 verbunden sein können. Weiters können auch etwaige Antriebe für die beweglichen Schutzwandelemente 19, 21 mit der Steuerungsvorrichtung 30 verbunden sein, um einen Zugriff für die Bedienperson 13 nur in sicheren Betriebszuständen zuzulassen.

In der Fig. 3 ist eine weitere und gegebenenfalls für sich eigenständige Ausführungsform des Werkzeugmagazins 1 gezeigt, wobei für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen. Das Ausführungsbeispiel gemäß Fig. 3 zeigt ein erfindungsgemäßes Werkzeugmagazin 1 mit zwei bezüglich der Bereitstellungsfläche 7 bzw. der Bereitstellungsebene 11 gegenüber liegend angeordneten Schutzeinrichtungen 17 und 18, die durch berührungslos wirkende Schutzeinrichtungen 20 und 22 mit Annäherungsfunktion gebildet sind. Die Funktion der berührungslosen Schutzeinrichtungen 20, 22 wurde bereits ausführlich anhand von Fig. 1 beschrieben und wird an dieser Stelle nicht wiederholt.

Ein weiteres Merkmal zur Erhöhung der Sicherheit der Bedienperson 13 besteht bei der Ausführung gemäß Fig. 3 darin, dass zwischen der ersten berührungslosen Schutzeinrichtung 20 und der zugehörigen Zugriffsöffnung 10 ein Sicherheitsabstand 44 vorhanden ist, der bewirkt, dass zwischen dem Erkennen der Annäherung des Manipulators 4 oder einer Hand der Bedienperson 3 an das Werkzeugmagazin 1 bis zum endgültigen Stillsetzen der Manipulatorbewegung ein ausreichender Weg zum Abbremsen der möglicherweise schnellen Manipulatorbewegung vorhanden ist. Zusätzlich kann, wie auch in Fig. 3 weiters dargestellt, auch die zweite berührungslose Schutzeinrichtung 22 einen Abstand 45 zur zugehörigen Zugriffsöffnung 16 aufweisen, wodurch ebenfalls zwischen dem Erkennen einer Annäherung der Bedienperson 13 und dem tatsächlichen Zugriff der Bedienperson 13 in den Gefährdungsbereich eine Zeitspanne verstreicht, innerhalb der die Gefährdung durch den Manipulator 4 beispielsweise durch Stillsetzen desselben beseitigt wird.

Die Sicherheitsabstände 44 und 45 können dabei je nach den benötigten Bremswegen für den Manipulator 4 bzw. entsprechend den Zeitspannen für die Beseitigung der Gefährdung unterschiedlich oder gleich gewählt werden.

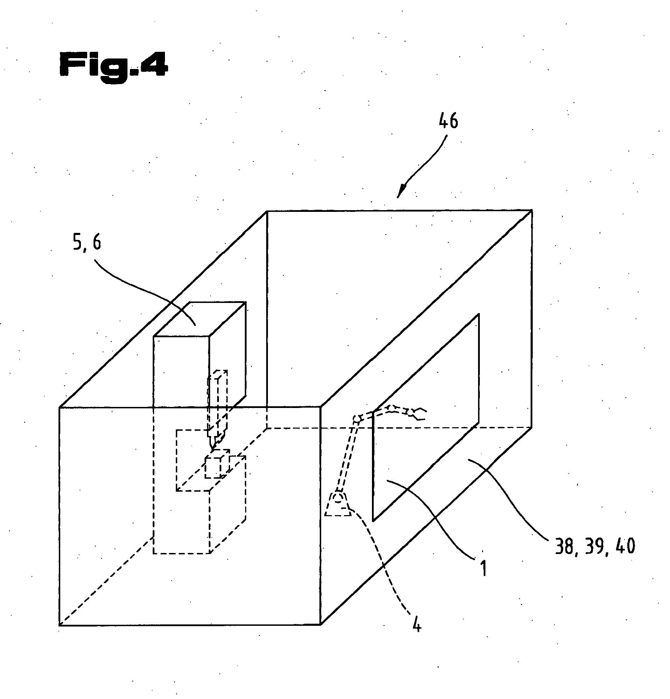

Fig. 4 zeigt eine Gesamtansicht einer Biegezelle 46, bei der eine Fertigungseinrichtung 5 in Form einer Biegemaschine 6 oder Abkantpresse mit einem Manipulator 4 kombiniert ist und diese mit einer Schutzeinrichtung 38, in Form eines Schutzzauns 39 oder einer Schutzwand 40 umgrenzt sind. Mit dem Manipulator 4 kann neben der Werkstückhandhabung innerhalb der Biegezelle 46 auch ein Werkzeugwechsel an der Fertigungseinrichtung 5 durchgeführt werden, wobei die Werkzeuge 3 in einem erfindungsgemäßen Werkzeugmagazin 1 bereitgestellt werden. Das Werkzeugmagazin 1 bildet dabei einen Teilabschnitt der umgrenzenden Schutzeinrichtung 38.

Der Ordnung halber sei abschließend darauf hingewiesen, dass zum besseren Verständnis des Aufbaus des Werkzeugmagazins 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

**Bezugszeichenaufstellung**

| | | | |
|---|---|---|---|
| 1 | Werkzeugmagazin | 41 | Überlappungsbereich |
| 2 | Werkzeugaufnahme | 42 | Koppelelement |
| 3 | Werkzeug | 43 | Führung |
| 4 | Manipulator | 44 | Sicherheitsabstand |
| 5 | Fertigungseinrichtung | 45 | Sicherheitsabstand |
| | | | |
| 6 | Biegemaschine | 46 | Biegezelle |
| 7 | Bereitstellungsfläche | | |
| 8 | Arbeitsraum | | |
| 9 | erste Seite | | |
| 10 | erste Zugriffsöffnung | | |
| | | | |
| 11 | Bereitstellungsebene | | |
| 12 | Gefahrenbereich | | |
| 13 | Bedienperson | | |
| 14 | Aufenthaltsbereich | | |
| 15 | zweite Seite | | |
| | | | |
| 16 | zweite Zugriffsöffnung | | |
| 17 | erste Schutzeinrichtung | | |
| 18 | zweite Schutzeinrichtung | | |
| 19 | Schutzwandelement | | |
| 20 | Schutzeinrichtung | | |
| | | | |
| 21 | Schutzwandelement | | |
| 22 | Schutzeinrichtung | | |
| 23 | Abmessung | | |
| 24 | Abmessung | | |
| 25 | Lichte Weite | | |
| | | | |
| 26 | Lichte Weite | | |
| 27 | Pfeil | | |
| 28 | Lichtschranken | | |
| 29 | Lichtgitter | | |
| 30 | Steuerungsvorrichtung | | |
| | | | |
| 31 | Positioniersensor | | |
| 32 | Positionssensor | | |
| 33 | Zuhaltevorrichtung | | |
| 34 | Zuhaltevorrichtung | | |
| 35 | Sensorelement | | |
| | | | |
| 36 | Informationsträger | | |
| 37 | Signalvorrichtung | | |
| 38 | Schutzeinrichtung | | |
| 39 | Schutzzaun | | |
| 40 | Schutzwand | | |

## Patentansprüche

1. Werkzeugmagazin (1) für einen Manipulator (4) mit mehreren in einer Bereitstellungsfläche (7), insbesondere einer im Wesentlichen vertikalen Bereitstellungsebene (11), verteilt angeordneten Werkzeugaufnahmen (2), wobei das Werkzeugmagazin (1) auf der einen Seite (9) der Bereitstellungsfläche (7) eine dem Manipulator (4) zugewandte erste Zugriffsöffnung (10) aufweist und auf der anderen Seite (15) der Bereitstellungsfläche (7) eine einer Bedienperson (13) zugewandte zweite Zugriffsöffnung (16) aufweist, der eine zweite Schutzeinrichtung (18) zugeordnet ist, **dadurch gekennzeichnet, dass** der ersten Zugriffsöffnung (10) eine erste Schutzeinrichtung (17) zugeordnet ist und die erste Schutzeinrichtung (17) und die zweite Schutzeinrichtung (18) miteinander gekoppelt und wechselweise aktivierbar bzw. deaktivierbar sind.

2. Werkzeugmagazin (1) nach Anspruch 1, **dadurch gekennzeichnet, dass** die schutzwirksamen Abmessungen (23, 24) der Schutzeinrichtungen (17, 18) größer sind, als die jeweils zugeordneten lichten Weiten (25, 26) der Zugriffsöffnungen (10, 16).

3. Werkzeugmagazin (1) nach Anspruch 1 oder 2, **dadurch gekennzeichnet, dass** zumindest eine Schutzeinrichtung (17, 18) durch wenigstens ein beweglich gelagertes mechanisch trennendes Schutzwandelement (19, 21) gebildet ist.

4. Werkzeugmagazin (1) nach Anspruch 3, **dadurch gekennzeichnet, dass** das Schutzwandelement (19, 21) mit einem mit einer auf den Manipulator (4) einwirkenden Steuerungsvorrichtung (30) verbundenen Positionssensor (31, 32) zusammenwirkt.

5. Werkzeugmagazin (1) nach Anspruch 3 oder 4, **dadurch gekennzeichnet, dass** das Schutzwandelement (19, 21) mit einer Zuhaltevorrichtung (33, 34) versehen ist, die steuerungstechnisch mit der anderen Schutzeinrichtung (17, 18) und/oder einer auf den Manipulator (4) einwirkenden Steuerungsvorrichtung (30) gekoppelt ist.

6. Werkzeugmagazin (1) nach einem der Ansprüche 3 bis 5, **dadurch gekennzeichnet, dass** das Schutzwandelement (19, 21) aus durchsichtigem Material hergestellt ist.

7. Werkzeugmagazin (1) nach einem der Ansprüche 3 bis 6, **dadurch gekennzeichnet, dass** die Schutzeinrichtungen (17,18) durch beweglich gelagerte und mechanisch gekoppelte Schutzwandelemente (19, 21) gebildet sind.

8. Werkzeugmagazin (1) nach Anspruch 7, **dadurch gekennzeichnet, dass** die Schutzwandelemente (19, 21) zueinander parallel und versetzt angeordnet und starr miteinander verbunden entlang einer zur Bereitstellungsfläche (7) parallel verlaufenden Führung (43) verstellbar sind.

9. Werkzeugmagazin (1) nach einem der Ansprüche 1 bis 6, **dadurch gekennzeichnet, dass** zumindest eine Schutzeinrichtung (17, 18) durch eine berührungslos wirkende Schutzeinrichtung (20, 22) mit Annäherungsfunktion, insbesondere mit Lichtschranken (28) oder Lichtgitter (29), gebildet ist und steuerungstechnisch mit der anderen Schutzeinrichtung (18,17) und/ oder mit einer auf den Manipulator (4) einwirkenden Steuerungsvorrichtung (30) gekoppelt ist.

10. Werkzeugmagazin (1) nach Anspruch 9, **dadurch gekennzeichnet, dass** die berührungslos wirkende Schutzeinrichtung (20, 22) in einem Sicherheitsabstand (44, 45) von der zugehörigen Zugriffsöffnung (10, 16) des Werkzeugmagazins (1) angeordnet ist.

11. Werkzeugmagazin (1) nach einem der Ansprüche 1 bis 10, **dadurch gekennzeichnet, dass** eine mit einer auf den Manipulator (4) einwirkenden Steuerungsvorrichtung (30) verbundene Signaleinrichtung (37) vorgesehen ist.

12. Werkzeugmagazin (1) nach einem der Ansprüche 1 bis 11, **dadurch gekennzeichnet, dass** die Werkzeugaufnahmen (2) mit Sensorelementen (35) zur Erfassung der Werkzeugposition und/oder von auf einem Informationsträger (36) enthaltenen Werkzeuginformationen versehen sind.

## Claims

1. Tool magazine (1) for a manipulator (4) with a plurality of tool holding fixtures (2) arranged distributed in a preparation area (7), in particular an essentially vertical preparation plane (11), the tool magazine (1) on the first side (9) of the preparation area (7) having a first access opening (10) facing the manipulator (4) and on the other side (15) of the preparation area (7) having a second access opening (16) facing an operator (13), to which a second protection device (18) is assigned, **characterized in that** the first access opening (10) is assigned a first protection device (17) and the first protection device (17) and the second protection device (18) are coupled together and can be activated and deactivated alternately.

2. Tool magazine (1) according to claim 1, **characterized in that** the protective dimensions (23, 24) of the protection devices (17, 18) are greater than the respectively associated internal widths (25, 26) of the access openings (10, 16).

3. Tool magazine (1) according to claim 1 or 2, **characterized in that** at least one protection device (17, 18) is formed by at least one movably mounted mechanically separating protective wall element (19, 21).

4. Tool magazine (1) according to claim 3, **characterized in that** the protective wall element (19, 21) works together with a position sensor (31, 32) connected with a control device (30) acting on the manipulator (4).

5. Tool magazine (1) according to claim 3 or 4, **characterized in that** the protective wall element (19, 21) is provided with a locking device (33, 34), which is coupled by control technology to the other protection device (17, 18) and/or a control device (30) acting on the manipulator (4).

6. Tool magazine (1) according to one of claims 3 to 5, **characterized in that** the protective wall element (19, 21) is made from a see-through material.

7. Tool magazine (1) according to one of claims 3 to 6, **characterized in that** the protection devices (17, 18) are formed by movably mounted and mechanically coupled protective wall elements (19, 21).

8. Tool magazine (1) according to claim 7, **characterized in that** the protective wall elements (19, 21) are arranged to be parallel to one another and offset to one another and can be displaced connected to one another rigidly along a guide (43) running parallel to the preparation area (7).

9. Tool magazine (1) according to one of claims 1 to 6, **characterized in that** at least one protection device (17, 18) is formed by a contactless operating protection device (20, 22) with an approaching function, in particular with light barriers (28) or light grids (29), and is coupled by control technology with the other protection device (18, 17) and/or with a control device (30) acting on the manipulator (4).

10. Tool magazine (1) according to claim 9, **characterized in that** the contactless operating protection device (20, 22) is arranged at a safety distance (44, 45) from the associated access opening (10, 16) of the tool magazine (1).

11. Tool magazine (1) according to one of claims 1 to 10, **characterized in that** a signal device (37) connected to a control device (30) acting on the manipulator (4) is provided.

12. Tool magazine (1) according to one of claims 1 to 11, **characterized in that** the tool holding fixtures (2) are provided with sensor elements (35) for detecting the tool position and/or tool information contained on an information carrier (36).

## Revendications

1. Magasin à outils (1) pour un manipulateur (4) comprenant plusieurs logements d'outils (2) agencés de façon répartie dans une surface de mise à disposition (7), en particulier un plan de mise à disposition (11) essentiellement vertical, étant entendu que le magasin à outils (1) présente sur un côté (9) de la surface de mise à disposition (7) une première ouverture d'accès (10) dirigée vers le manipulateur (4) et sur l'autre côté (15) de la surface de mise à disposition (7) une deuxième ouverture d'accès (16) dirigée vers un opérateur (13), à laquelle est adjoint un deuxième dispositif de protection (18), **caractérisé en ce qu'**un premier dispositif de protection (17) est adjoint à la première ouverture d'accès (10) et **en ce que** le premier dispositif de protection (17) et le deuxième dispositif de protection (18) sont couplés l'un avec l'autre et peuvent être activés ou désactivés en alternance.

2. Magasin à outils (1) selon la revendication 1, **caractérisé en ce que** les dimensions (23, 24) des dispositifs de protection (17, 18) fonctionnelles pour la protection sont plus grandes que les largeurs intérieures (25,26) des ouvertures d'accès (10, 16) respectives correspondantes.

3. Magasin à outils (1) selon la revendication 1 ou 2, **caractérisé en ce qu'**au moins un dispositif de protection (17, 18) est formé par au moins un élément de paroi de protection (19, 21) réalisant une séparation mécanique monté de façon mobile.

4. Magasin à outils (1) selon la revendication 3, **caractérisé en ce que** l'élément de paroi de protection (19, 21) coopère avec un capteur de position (31, 32) relié avec un dispositif de commande (30) agissant sur le manipulateur (4).

5. Magasin à outils (1) selon la revendication 3 ou 4, **caractérisé en ce que** l'élément de paroi de protection (19, 21) est pourvu d'un dispositif d'arrêt (33, 34), qui est couplé au niveau technique de la commande avec l'autre dispositif de protection (17, 18) et/ou avec un dispositif de commande (30) agissant sur le manipulateur (4).

6. Magasin à outils (1) selon l'une des revendications 3 à 5, **caractérisé en ce que** l'élément de paroi de protection (19, 21) est réalisé dans un matériau transparent.

7. Magasin à outils (1) selon l'une des revendications 3 à 6, **caractérisé en ce que** les dispositifs de protection (17, 18) sont formés par des éléments de paroi de protection (19, 21) montés de façon mobile et couplés mécaniquement.

8. Magasin à outils (1) selon la revendication 7, **caractérisé en ce que** les éléments de paroi de protection (19, 21) sont agencés de façon parallèle et décalée l'un par rapport à l'autre et reliés de façon fixe l'un avec l'autre le long d'un guide (43) s'étendant parallèlement à la surface de mise à disposition (7).

9. Magasin à outils (1) selon l'une des revendications 1 à 6, **caractérisé en ce qu'**au moins un dispositif de protection (17, 18) est formé par un dispositif de protection fonctionnant sans contact (20, 22) avec une fonction d'approche, en particulier avec des barrières lumineuses (28) ou des dispositifs photoélectriques (29), et couplé au niveau technique de la commande avec l'autre dispositif de protection (18, 17) et/ou avec un dispositif de commande (30) agissant sur le manipulateur (4).

10. Magasin à outils (1) selon la revendication 9, **caractérisé en ce que** le dispositif de protection fonctionnant sans contact (20, 22) est agencé à une distance de sécurité (44, 45) de l'ouverture d'accès (10, 16) correspondante du magasin à outils (1).

11. Magasin à outils (1) selon l'une des revendications 1 à 10, **caractérisé en ce qu'**il est prévu un dispositif de signalisation (37) relié avec un dispositif de commande (30) agissant sur le manipulateur (4).

12. Magasin à outils (1) selon l'une des revendications 1 à 11, **caractérisé en ce que** les logements d'outils (2) sont pourvus d'éléments de capteurs (35) afin de détecter la position des outils et/ou des informations sur les outils contenues dans un support d'informations (36).
